# DEMANDE DE BREVET EUROPEEN

(11) **EP 1 038 739 A1**
(43) Date de publication de la demande: **27.09.2000**
(21) Numéro de dépôt: 00400782.9
(22) Date de dépôt: 22.03.2000
(51) Int. Cl.: B60S 3/00

(54) **Procédé de nettoyage et installation de séchage d'un habitacle de véhicule automobile**

(30) Priorité: 23.03.1999 FR 9903563
(71) Demandeur: Bourard, Christophe, 76550 Tourville-sur-Arques (FR)
(72) Inventeur: Bourard, Christophe, 76550 Tourville-sur-Arques (FR)
(74) Mandataire: Kohn, Philippe

(57) **Abrégé**

Installation (10) pour le séchage de l'intérieur (30) d'un habitacle humide d'un véhicule automobile (12), notamment après son lavage, caractérisé en ce qu'elle comporte des moyens de séchage par soufflage d'air chaud à l'intérieur (30) de l'habitacle du véhicule (12), qui présentent une capacité d'évaporation élevée, pour permettre le lavage de l'intérieur du véhicule en utilisant de l'eau en phase liquide.

L'invention propose aussi un procédé de nettoyage mettant en oeuvre une telle installation (10).

## Description

L'invention concerne une installation pour le séchage de l'intérieur d'un habitacle humide d'un véhicule automobile.

L'invention concerne plus particulièrement une installation pour le séchage de l'intérieur d'un habitacle humide d'un véhicule automobile, notamment après son lavage.

Conventionnellement, le nettoyage de l'intérieur de l'habitacle d'un véhicule automobile est une opération manuelle longue et fastidieuse.

Dans la plupart des cas, elle consiste en un premier nettoyage à l'aspirateur, suivi d'une opération de nettoyage de l'intérieur à l'aide de produits détergents adaptés à chaque type de garniture qui est susceptible d'être rencontrée à l'intérieur de l'habitacle. Les garnitures comportant du tissu ou de la mousse synthétique, comme les sièges ou les panneaux d'habillage garnissage de portes, sont particulièrement difficiles à nettoyer car le nettoyage ne peut concerner que leur surface extérieure.

Ainsi, malgré un nettoyage méticuleux de ces garnitures, il arrive que même après nettoyage subsistent des odeurs émanant de celles-ci. C'est notamment le cas lorsque le véhicule nettoyé est un véhicule ancien, ou un véhicule dans lequel on a fumé. Les garnitures sont alors imprégnées en profondeur de résidus de tabac, et un nettoyage superficiel ne peut suffire à éliminer de telles odeurs.

Pour remédier à ces inconvénients, on a imaginé de nettoyer l'intérieur des véhicules à la vapeur d'eau. L'intérieur du véhicule est ensuite aéré de façon à permettre le séchage des garnitures humides. Les résultats d'un tel nettoyage sont globalement satisfaisants mais l'opération de nettoyage se trouve être une opération longue du fait du temps considérable nécessaire pour le séchage à l'air ambiant.

Pour remédier à cet inconvénient, on a proposé d'accélérer le séchage en utilisant des moyens de soufflage d'air chaud.

Le document EP-A2-0352459 décrit et représente un montage démontable conçu spécifiquement pour la maintenance des véhicules automobiles, qui comporte une structure aérée tubulaire construite à partir de modules susceptibles d'être assemblés les uns aux autres et délimitant un espace de travail, trois postes agencés autour de la périphérie de l'espace de travail qui sont utilisés pour le rangement et la présentation de produits et d'équipements de maintenance du véhicule, une série de lampes et de spots d'intensité variable disposés en des endroits divers de l'espace de travail qui sont susceptibles d'éclairer le véhicule sans laisser de zone d'ombre, un rack tournant de séchage des tapis, un système intégré d'alimentation électrique, un système intégré d'alimentation en eau, des moyens d'aspiration, une pluralité d'équipements spécialisés de maintenance automobile tels que des ventilateurs, et un compresseur d'air lié à la structure tubulaire ou agencé dans les postes.

En particulier, la structure de ce montage comporte des moyens de soufflage d'air chaud à l'intérieur du véhicule suite à son nettoyage à la vapeur, notamment au moins une soufflerie et un conduit dont l'extrémité est destinée à être abouchée à une fenêtre du véhicule pour son séchage.

Un tel montage permet de réduire quelque peu le temps d'immobilisation du véhicule, mais ce temps d'immobilisation reste toutefois relativement élevé.
conséquent en phase liquide, et de pouvoir rincer de même l'intérieur du véhicule avec de l'eau.

Or, un montage tel que celui décrit dans le document EP-A2-0352459 ne permet pas d'effectuer un séchage satisfaisant de l'intérieur du véhicule. La structure aérée de ce montage conduit en effet à une dispersion importante des calories produites par les moyens de soufflage d'air chaud, et il n'est pas possible d'augmenter de façon considérable le débit calorique de ceux-ci du fait de la présence à proximité de nombreux autres équipements qui risqueraient d'être détériorés par la proximité d'une source importante de chaleur.

Par ailleurs, il n'est pas non plus concevable de nettoyer l'intérieur de l'habitacle du véhicule en utilisant de l'eau en phase liquide, puis de la laisser s'évaporer naturellement. Le temps d'immobilisation du véhicule serait trop élevé et, de surcroît, une telle opération risquerait de provoquer l'apparition de moisissures sur les garnitures en tissu de l'intérieur de l'habitacle.

Un tel montage est par conséquent limité à une application mettant en oeuvre un procédé de nettoyage utilisant de l'eau vaporisée.

Pour résoudre ces inconvénients, l'invention propose un procédé de nettoyage permettant de nettoyer en profondeur l'intérieur de l'habitacle du véhicule, et notamment ses garnitures en tissu, ledit procédé utilisant de l'eau en phase liquide, et une installation pour le séchage de l'intérieur de l'habitacle du véhicule mise en oeuvre dans cadre du procédé selon l'invention.

Dans ce but l'invention propose un procédé de nettoyage de l'intérieur d'un habitacle d'un véhicule automobile, caractérisé en ce qu'il comporte successivement, une étape de lavage à l'aide d'un agent nettoyant en phase liquide, une étape de rinçage à l'eau en phase liquide, une du véhicule mise en oeuvre dans cadre du procédé selon l'invention.

Dans ce but l'invention propose un procédé de nettoyage de l'intérieur d'un habitacle d'un véhicule automobile, caractérisé en ce qu'il comporte successivement, une étape de lavage à l'aide d'un agent nettoyant en phase liquide, une étape de rinçage à l'eau en phase liquide, une étape d'aspiration de l'eau, et une étape de séchage de l'intérieur de l'habitacle par soufflage d'air chaud.

Un tel procédé permet notamment de nettoyer en profondeur les garnitures en tissu ou en mousse, tout en les séchant rapidement afin qu'elles ne se dégradent pas et que le temps total d'immobilisation du véhicule soit réduit.

Selon d'autres caractéristiques du procédé :
- l'étape de lavage comporte un lavage à l'aide d'un appareil de nettoyage à haute pression pulvérisant un détergent en solution aqueuse,
- l'étape de séchage comporte l'introduction du véhicule dans une cabine de séchage fermée et calorifugée, et l'introduction par un ouvrant du véhicule, d'au moins un tube de distribution d'air chaud soufflé,
- un nombre de tubes de distribution d'air chaud soufflé au moins double du nombre de sièges du véhicule est introduit par les vitres latérales baissées du véhicule,
- les extrémités de la moitié des tubes de distribution d'air chaud sont dirigées vers les sièges à courte distance de ceux-ci, les extrémités de l'autre moitié des tubes de distribution d'air chaud étant dirigées vers le plancher du véhicule.

L'invention propose aussi une installation pour le séchage de l'intérieur d'un habitacle humide d'un véhicule automobile, notamment après son lavage, caractérisé en ce qu'elle comporte des moyens de séchage par soufflage d'air chaud à l'intérieur de l'habitacle du véhicule, qui présentent une capacité d'évaporation élevée, pour permettre le lavage de l'intérieur du véhicule en utilisant de l'eau en phase liquide.

Selon d'autres caractéristiques de l'invention :
- les moyens de séchage par soufflage d'air chaud à capacité d'évaporation élevée comportent une cabine de séchage fermée et calorifugée qui est destinée à recevoir le véhicule à sécher, et qui comporte des moyens de distribution d'air chaud pénétrant à l'intérieur de l'habitacle du véhicule,
- les moyens de distribution d'air chaud comportent au moins un tube de distribution d'air chaud soufflé dont une extrémité aval est destinée à être introduite dans l'habitacle du véhicule,
- les extrémités amont des tubes sont reliées à des sorties d'un distributeur d'air chaud fixé au plafond de la cabine,
- le distributeur est alimenté en air chaud soufflé par un conduit d'alimentation intérieur qui est relié à un système de chauffage qui est agencé à l'extérieur à la cabine,
- le conduit d'alimentation intérieur comporte le distributeur,
- le distributeur comporte un nombre égal de sorties de chaque côté du véhicule,
- le système de chauffage comporte une chaudière alimentée en fioul domestique ou en gaz,
- le système de chauffage est alimenté pour partie en air frais provenant de l'extérieur de la cabine et pour partie en air chaud recyclé en provenance de la cabine,
- l'installation comporte un boîtier de mélange d'air qui est accolé à la cabine de séchage, dont une première entrée communique avec la cabine de séchage, dont une deuxième entrée communique avec l'extérieur de la cabine, et dont une sortie alimente le système de chauffage,
- le système de chauffage comporte une soufflerie qui est interposée entre la chaudière et le conduit d'alimentation.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un premier mode de réalisation de l'installation de séchage selon l'invention ;
- la figure 2 est une vue en coupe longitudinale de l'installation de séchage selon la figure 1 ;
- la figure 3 est une vue en bout de l'installation de séchage selon la figure 1 ;
- la figure 4 est une vue en coupe longitudinale d'un second mode de réalisation de l'installation de séchage selon l'invention ; et
- la figure 5 est une vue de dessus d'un troisième mode de réalisation de l'installation de séchage.

Dans la description qui va suivre, des chiffres de référence identiques désignent des éléments identiques ou ayant des fonctions similaires.

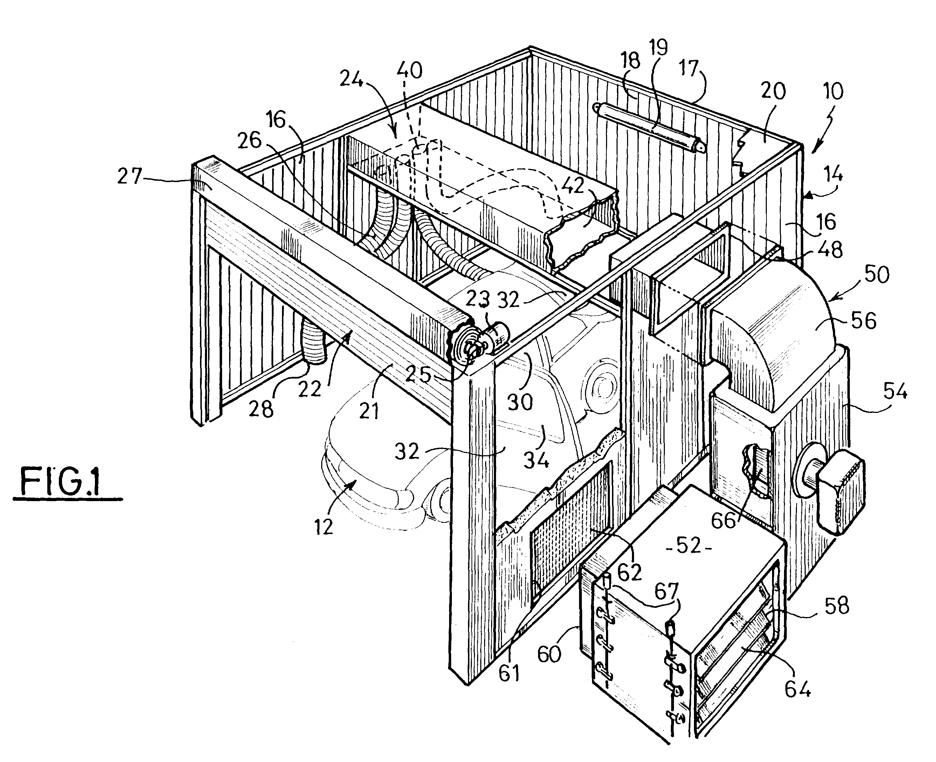

On a représenté sur la figure 1 l'ensemble d'une installation 10 pour le séchage de l'intérieur d'un habitacle humide d'un véhicule automobile 12 après son lavage.

Conformément au procédé objet de l'invention, l'intérieur d'un habitacle d'un véhicule automobile 12 peut être nettoyé suivant au moins quatre étapes successives, une première étape de lavage à l'aide d'un agent nettoyant, puis une deuxième étape de rinçage à l'eau, puis une troisième étape d'aspiration de l'eau, et enfin une quatrième étape de séchage de l'intérieur de l'habitacle du véhicule 12 par soufflage d'air chaud, cette dernière étape mettant en oeuvre l'installation représentée aux figures 1 à 5.

Lors du nettoyage de l'intérieur de l'habitacle du véhicule 12, la première étape de lavage de l'intérieur de l'habitacle du véhicule 12 est réalisée à l'aide d'un appareil (non représenté) de nettoyage à haute pression diffusant un détergent en solution aqueuse. Ainsi, tous les éléments appartenant à l'intérieur de l'habitacle du véhicule 12, et notamment des garnitures en tissu ou en mousse comme des sièges, des panneaux de porte, ou un ciel de pavillon du véhicule 12, peuvent être aspergés et pénétrés par le détergent en solution aqueuse, ce qui permet de les nettoyer en profondeur.

Dans des étapes suivantes du procédé de nettoyage selon l'invention, l'intérieur de l'habitacle du véhicule est rincé à l'eau, laquelle est par la suite aspirée, par exemple à l'aide d'un aspirateur à eau du commerce.

L'utilisation pour le lavage d'un agent nettoyant en solution aqueuse, pulvérisé sous phase liquide, et l'utilisation d'eau en phase liquide pour le rinçage, permettent de réaliser un nettoyage approfondi de meilleur qualité qu'un nettoyage réalisé conventionnellement à l'aide de vapeur d'eau.

L'intérieur de l'habitacle est ensuite séché à l'air chaud dans l'installation 10.

Conformément à l'invention, et comme l'illustre la figure 1, l'installation 10 comporte une cabine 14 de séchage fermée et calorifugée, sensiblement parallélépipédique et d'orientation longitudinale, qui peut notamment être installée sur le sol d'un atelier de nettoyage (non représenté). La cabine 14 de séchage comporte deux parois latérales verticales 16 fixes, une paroi transversale verticale fixe de fond 18, un toit horizontal 20 fixe et une porte transversale verticale 22 mobile.

Les parois latérales verticales 16, la paroi transversale verticale 18 et le toit 20 sont par exemple des éléments préfabriqués assemblés à l'aide d'une armature métallique 17.

La cabine 14 de séchage comporte un éclairage 19, notamment une rampe fluorescente étanche aux projections d'eau.

Dans le mode de réalisation préféré de l'invention, les parois latérales verticales 16, la paroi transversale verticale 18, le toit horizontal 20 fixe et la porte transversale verticale mobile 22 sont calorifugés de manière à, comme on le verra ultérieurement, éviter les déperditions de chaleur à l'extérieur de la cabine 14 de séchage.

Dans le mode de réalisation préféré de l'invention, la porte transversale verticale 22 est une porte coulissante verticalement, notamment une porte 22 à volet roulant, qui est susceptible d'être escamotée pour permettre l'accès à la cabine 14 de séchage d'un véhicule automobile 12 pour son séchage.

La porte 22 à volet roulant comporte un rideau 21 à lamelles qui est susceptible d'être enroulé par un moteur électrique 23 autour d'un axe transversal 25 afin d'être escamoté dans une boîte à rideau 27 supérieure.

Cette disposition n'est pas limitative de l'invention, et en variante, la porte 22 pourrait être une porte rigide articulée autour d'un axe horizontal ou vertical.

Quel que soit le mode de réalisation de la porte 22, celle-ci comporte de préférence des moyens d'étanchéité avec les deux parois latérales verticales 16 fixes et le toit horizontal 20 fixe.

Une fois que le véhicule 12 est introduit dans la cabine 14 de séchage, des moyens 24 de distribution d'air chaud, qui présentent une capacité d'évaporation élevée, sont placés à l'intérieur de l'habitacle du véhicule 12, la porte 22 est refermée et l'opération de séchage de l'intérieur de l'habitacle du véhicule 12 peut commencer.

Il sera compris que l'utilisation des moyens 24 de distribution d'air chaud présentant une capacité d'évaporation élevée est complémentaire de l'utilisation d'une cabine 14 fermée et sensiblement étanche. En effet, seule une cabine 14 étanche peut permettre de sécher efficacement l'intérieur de l'habitacle du véhicule 12 de façon satisfaisante, c'est à dire sans que les calories produites par les moyens de distribution d'air chaud ne soit dispersées en dehors de l'habitacle du véhicule 12.

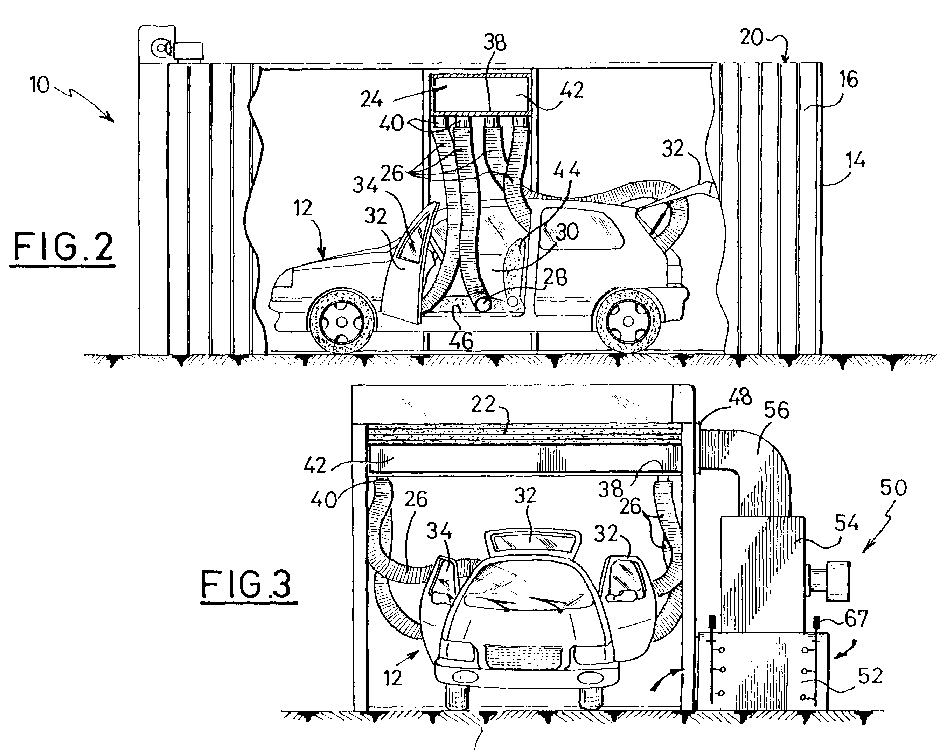

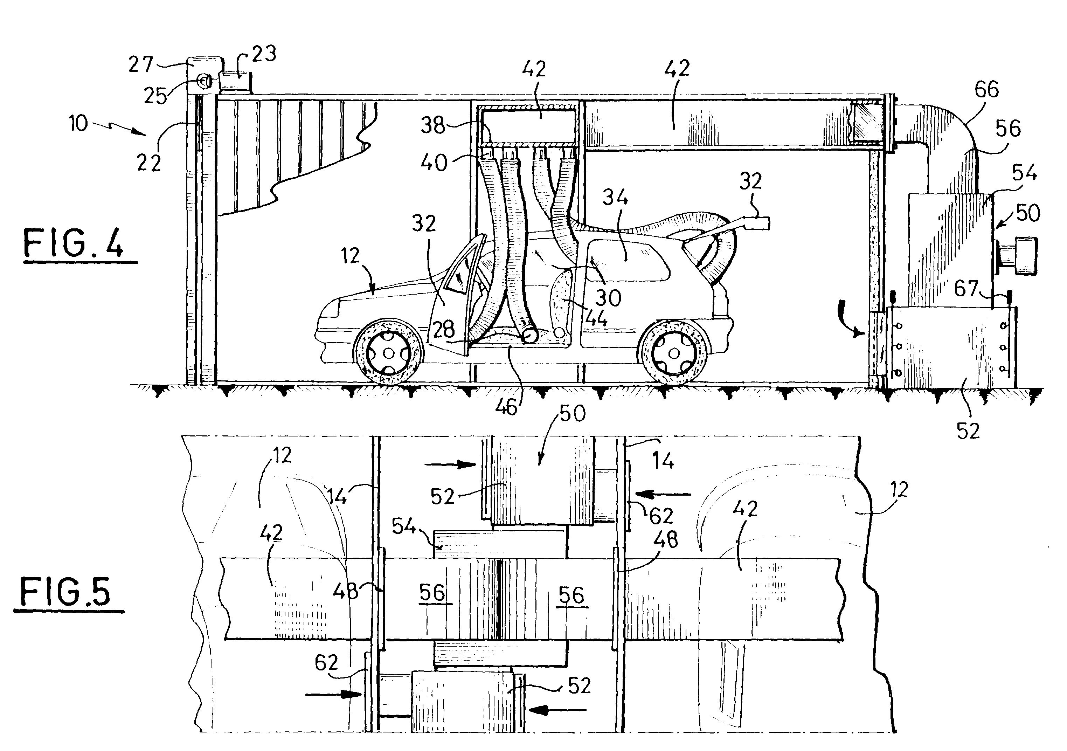

Conformément à l'invention, et comme l'illustrent les figures 2 et 4, les moyens 24 de distribution d'air chaud comportent au moins un tube 26 de distribution d'air chaud dont une extrémité 28 est destinée à être introduite à l'intérieur 30 de l'habitacle du véhicule 12 en vue de son séchage.

Dans le mode de réalisation préféré de l'invention, les moyens 24 de distribution d'air chaud comportent plusieurs tubes souples 26 de distribution d'air chaud soufflé, par exemple huit tubes 26, qui sont introduits, comme l'illustrent les figures 2 à 4, par des ouvrants du véhicule 12, notamment des portes 32 ou des vitres coulissantes 34.

Afin de garantir un séchage optimal de l'intérieur de l'habitacle du véhicule, les extrémités 28 des tubes 26 sont préférentiellement introduites par les vitres 34 du véhicule lorsque celles-ci ne sont pas des vitres fixes et qu'elles peuvent être ouvertes, de façon à garder les portes 32 du véhicule 12 fermées et limiter ainsi les déperditions de chaleur vers l'extérieur de l'habitacle du véhicule 12 dans la cabine 14.

Toutefois, lorsque les vitres 34 ne peuvent être ouvertes, comme on l'a représenté sur les figures 2 à 4, le séchage de l'intérieur 30 de l'habitacle du véhicule 12 peut être réalisé en introduisant les tubes 26 par les portes 32 du véhicule 12. En effet, avantageusement, les moyens 24 de distribution d'air chaud à capacité d'évaporation élevée sont prévus pour fournir une puissance thermique suffisante au séchage de l'intérieur 30 de l'habitacle du véhicule 12, même lorsque les portes 32 de celui-ci sont partiellement ou complètement ouvertes.

Les tubes 26 de distribution d'air chaud soufflé sont alimentés en air chaud soufflé par un distributeur 38 qui comporte autant de sorties 40 que d'extrémités aval des tubes 26. Le distributeur 38 est avantageusement fixé sous le plafond ou toit 20 de la cabine 14 de façon que les tubes 26 pendent du plafond et puissent être introduits aisément dans le véhicule 12.

Avantageusement, un nombre égal de tubes 26 est disposé de chaque côté du véhicule.

Le distributeur 38 est alimenté en air chaud par un conduit 42 qui est lui aussi fixé au plafond ou toit 20 de la cabine 14.

Dans un premier mode de réalisation de l'invention représenté aux figures 1 à 3, le conduit 42 est fixé transversalement sur le plafond ou toit 20 de la cabine 14, et comporte le distributeur 38. Dans ce mode de réalisation, le distributeur 38 est intégré au conduit 42 et consiste simplement en un nombre de sorties 40 qui sont mises en communication avec le conduit 42 et qui présentent une forme cylindrique de même diamètre que les tubes 26 pour permettre le branchement des tubes 26.

Dans un second mode de réalisation représenté à la figure 4, le conduit 42 est aussi fixé au plafond ou toit 20 mais il est sensiblement longitudinal et il est relié à au moins un distributeur 38 qui comporte les sorties 40 reliées aux tubes 26.

Comme l'illustrent les figures 2 et 4, lorsque le véhicule 12 est en position dans la cabine 14 de séchage et que les tubes 26 sont introduits dans le véhicule 12, les extrémités 28 des tubes 26 sont réparties à l'intérieur 30 de l'habitacle du véhicule 12 en direction de sièges 44 et d'un plancher 46 du véhicule 12. Les extrémités 28 des tubes 26 sont placées de préférence à une courte distance des sièges 44 et du plancher 46, notamment une distance de l'ordre de 15 cm, de façon à favoriser un séchage rapide des garnitures en tissu ou en mousse des sièges 44 et du plancher 46.

A cet effet, le nombre de tubes 26 est préférentiellement égal au double du nombre de sièges 44 que comporte le véhicule 12.

Les tubes souples 26 sont alimentés en air chaud soufflé par l'intermédiaire du distributeur 38 et du conduit 42. Le conduit 42 est lui-même alimenté en air chaud soufflé par une bouche d'alimentation 48 qui est agencée à l'extrémité du tube 42 opposée au distributeur 38 qui débouche à l'extérieur de la cabine 14 et qui est reliée à un système de chauffage 50 agencé à l'extérieur de la cabine 14.

Le système de chauffage 50 permet de fournir de l'air chaud soufflé et il comporte à cet effet un boîtier de mélange d'air 52, une chaudière 54 et une soufflerie 56. La chaudière 54 est conventionnellement une chaudière à fioul domestique mais, de façon non limitative de l'invention, peut aussi être une chaudière à gaz, ou une chaudière électrique.

La chaudière 54 est alimentée en air par le boîtier 52 de mélange d'air qui est accolé à la cabine de séchage 14 et qui comporte deux entrées, notamment une entrée 58 d'alimentation en air frais en provenance de l'extérieur et une entrée 60 communiquant avec une bouche de recyclage 62 traversant la paroi latérale verticale 16 de la cabine 14 de séchage, pour recycler une partie de l'air chaud en provenance de la cabine 14.

Avantageusement, la bouche de recyclage 62 comporte une grille 61 de filtration.

Pour favoriser la canalisation de l'air chaud ou froid en provenance respectivement de l'intérieur de la cabine 14 ou de l'extérieur, les entrées 58 et 60 du boîtier 52 de mélange d'air comporte des volets basculants 64 dont l'inclinaison peut être réglée par des systèmes à tringles 67, et qui permettent, comme l'illustrent les figures 3 et 4, de brasser l'air chaud et l'air froid dans le boîtier 52 avant que le mélange d'air ne soit conduit vers la chaudière 54.

L'air chaud produit en sortie de la chaudière 54 est aspiré dans un conduit 66 qui contient la soufflerie 56, et qui souffle l'air porté à une température d'environ 80°C au travers de la bouche 48 vers le conduit 42 d'alimentation en air chaud du distributeur 38.

Le boîtier 52 permet ainsi avantageusement de recycler une partie de l'air chaud en provenance de la cabine 14 de façon à alimenter la chaudière 54 en air préchauffé, et donc de limiter la consommation en fioul de celle-ci, un air déjà préchauffé demandant moins d'énergie pour son réchauffage qu'un air froid qui viendrait uniquement de l'extérieur.

La température de l'air chaud en sortie de la chaudière 54 est volontairement limitée à la température maximale que l'habitacle intérieur du véhicule peut supporter, notamment celle que le véhicule laissé sur un parking ensoleillé serait susceptible de supporter sans dégradation de ses garnitures intérieures.

Par ailleurs, selon un troisième mode de réalisation de l'invention illustré à la figure 5, le système de chauffage 50 peut être un système de chauffage agencé communément en position centrale entre deux cabines 14 de séchage, une chaudière 54 commune débitant dans deux souffleries 56 qui débitent dans les deux cabines 14 de séchage. Cette disposition n'est une fois de plus pas limitative de l'invention, et en variante (non représentée) un système de chauffage 50 unique reprenant les éléments précédemment énumérés pourrait alimenter une batterie de cabines 14 de séchage analogues à celles décrite ci-dessus.

Avantageusement, l'installation 10 permet donc d'élever de façon importante la température à l'intérieur de l'habitacle 30 du véhicule 12 sans dégrader les matériaux plastiques des garnitures de celui-ci, le séchage de l'intérieur 30 du véhicule 12 résultant autant de la température élevée qui règne à l'intérieur de l'habitacle que de l'intense circulation d'air qui le traverse.

Une telle installation 10 permet notamment, après un lavage à haute pression ayant laissé subsister dans les garnitures environ une douzaine de litres d'eau après aspiration, de sécher l'intérieur 30 de l'habitacle du véhicule 12 en une heure et demie.

A titre de variante non représentée, il est aussi possible de concevoir une cabine 14 permettant le séchage simultané de plusieurs véhicules 12, le distributeur 38 alimentant à cet effet plusieurs jeux de tubes 26 de soufflage d'air chaud.

L'extrémité libre 28 de chaque tube peut être cylindrique, comme cela est représenté sur les figures, ou bien conformée, par exemple au moyen d'une buse amovible, selon une forme particulière permettant de l'adapter en fonction d'une zone particulière à sécher, ou pour augmenter localement la vitesse de l'air chaud soufflé.

Sans sortir du cadre de l'invention, et notamment pour des véhicules de grandes dimensions tels que des véhicules de transport en commun, autobus, autocars, ou wagons de chemin de fer, on peut prévoir des tuyaux de réaspiration qui sont introduits dans l'habitacle pour "organiser" la circulation générale de l'air chaud soufflé et pour faciliter son recyclage.

## Revendications

1. Installation (10) pour le séchage de l'intérieur (30) d'un habitacle humide d'un véhicule automobile (12), notamment après son lavage,
caractérisé en ce qu'elle comporte des moyens de séchage par soufflage d'air chaud à l'intérieur (30) de l'habitacle du véhicule (12), qui présentent une capacité d'évaporation élevée, pour permettre le lavage de l'intérieur du véhicule en utilisant de l'eau en phase liquide.

2. Installation (10) selon la revendication précédente, caractérisée en ce que les moyens de séchage par soufflage d'air chaud à capacité d'évaporation élevée comportent une cabine (14) de séchage fermée et calorifugée qui est destinée à recevoir le véhicule (12) à sécher, et qui comporte des moyens (24) de distribution d'air chaud pénétrant à l'intérieur (30) de l'habitacle du véhicule (12).

3. Installation (10) selon la revendication 2, caractérisée en ce que les moyens (24) de distribution d'air chaud comportent au moins un tube (26) de distribution d'air chaud soufflé dont une extrémité aval (28) est destinée à être introduite dans l'habitacle du véhicule (12).

4. Installation (10) selon la revendication précédente, caractérisée en ce que les extrémités amont des tubes (26) sont reliées à des sorties (40) d'un distributeur (38) d'air chaud fixé au plafond (20) de la cabine (14).

5. Installation selon la revendication précédente, caractérisée en ce que le distributeur (38) est alimenté en air chaud soufflé par un conduit (42) d'alimentation intérieur qui est relié à un système (50) de chauffage qui est agencé à l'extérieur à la cabine (14).

6. Installation (10) selon la revendication précédente, caractérisée en ce que le conduit (42) d'alimentation intérieur comporte le distributeur (38).

7. Installation selon l'une des revendications 4 à 6, caractérisée en ce que le distributeur (38) comporte un nombre égal de sorties (40) de chaque côté du véhicule (12).

8. Installation (10) selon l'une quelconque des revendications 5 à 7, caractérisée en ce que le système (50) de chauffage comporte une chaudière (54) alimentée en fioul domestique ou en gaz.

9. Installation (10) selon l'une quelconque des revendications 5 à 8, caractérisée en ce que le système (50) de chauffage est alimenté pour partie en air frais provenant de l'extérieur de la cabine (14) et pour partie en air chaud recyclé en provenance de la cabine (14).

10. Installation (10) selon la revendication 9, caractérisée en ce qu'elle comporte un boîtier (52) de mélange d'air qui est accolé à la cabine (14) de séchage, dont une première entrée (62) communique avec la cabine (14) de séchage, dont une deuxième entrée (64) communique avec l'extérieur de la cabine (14), et dont une sortie alimente le système (50) de chauffage.

11. Installation (10) selon l'une quelconque des revendications 8 à 10, caractérisée en ce que le système (50) de chauffage comporte une soufflerie (66) qui est interposée entre la chaudière (54) et le conduit d'alimentation (42).

12. Procédé de nettoyage de l'intérieur (30) d'un habitacle d'un véhicule (12) automobile, caractérisé en ce qu'il comporte successivement, une étape de lavage à l'aide d'un agent nettoyant en phase liquide, une étape de rinçage à l'eau en phase liquide, une étape d'aspiration de l'eau, et une étape de séchage de l'intérieur (30) de l'habitacle par soufflage d'air chaud.

13. Procédé de nettoyage selon la revendication précédente, caractérisé en ce que l'étape de lavage comporte un lavage à l'aide d'un appareil de nettoyage à haute pression pulvérisant un détergent en solution aqueuse.

14. Procédé de nettoyage selon l'une quelconque des revendications 12 ou 13, caractérisé en ce que l'étape de séchage comporte l'introduction du véhicule (12) dans une cabine (14) de séchage fermée et calorifugée, et l'introduction par un ouvrant (32,34) du véhicule, d'au moins un tube (26) de distribution d'air chaud soufflé.

15. Procédé de nettoyage selon la revendication précédente, caractérisé en ce qu'un nombre de tubes (26) de distribution d'air chaud soufflé au moins double du nombre de sièges (44) du véhicule (12) est introduit par les vitres latérales (34) baissées du véhicule (12).

16. Procédé de nettoyage selon l'une quelconque des revendications 14 ou 15, caractérisé en ce que les extrémités (28) de la moitié des tubes (26) de distribution d'air chaud sont dirigées vers les sièges (44) à courte distance de ceux-ci, les extrémités (28) de l'autre moitié des tubes (26) de distribution d'air chaud étant dirigées vers le plancher (46) du véhicule (12).
